(19) Europäisches Patentamt
European Patent Office
Office européen des brevets

(11) **EP 3 048 363 A1**

(12) **EUROPÄISCHE PATENTANMELDUNG**

(43) Veröffentlichungstag:
    **27.07.2016  Patentblatt 2016/30**

(21) Anmeldenummer: **15201889.1**

(22) Anmeldetag: **22.12.2015**

(51) Int Cl.:
    *F21V 5/04* (2006.01)     *F21V 7/08* (2006.01)
    *G03B 21/20* (2006.01)    *F21V 11/10* (2006.01)
    *G02B 19/00* (2006.01)

(84) Benannte Vertragsstaaten:
    **AL AT BE BG CH CY CZ DE DK EE ES FI FR GB GR HR HU IE IS IT LI LT LU LV MC MK MT NL NO PL PT RO RS SE SI SK SM TR**
    Benannte Erstreckungsstaaten:
    **BA ME**
    Benannte Validierungsstaaten:
    **MA MD**

(30) Priorität: **26.01.2015  DE 102015201300**

(71) Anmelder: **OSRAM GmbH**
    **80807 München (DE)**

(72) Erfinder: **Rehn, Henning**
    **13407 Berlin (DE)**

(54) **BELEUCHTUNGSVORRICHTUNG MIT LICHTQUELLE UND REFLEKTOR MIT ELLIPSOIDALER REFLEXIONSFLÄCHE**

(57)    Die vorliegende Erfindung betrifft eine Beleuchtungsvorrichtung (1) mit einer Lichtquelle (2), einem Reflektor (10) mit einer ellipsoidalen Reflexionsfläche (4), in deren erstem Brennpunkt (3) die Lichtquelle (2) angeordnet ist, einer asphärischen Linse (9) und einer Austrittspupille (7) als Ausgang der Beleuchtungsvorrichtung (1), wobei die Austrittspupille (7) so dimensioniert und relativ zu dem Reflektor (10) angeordnet ist, dass ohne die asphärische Linse (9) nur ein erster Teil (41) des reflektierten Lichts durch die Austrittspupille (7) treten würde, welchen ersten Teil (41) die asphärische Linse (9) im Wesentlichen ohne Änderung des Öffnungswinkels zur Austrittspupille (7) passieren lässt, wobei die asphärische Linse (9) zusätzlich einen zweiten, ohne die asphärische Linse (9) außerhalb der Austrittspupille (7) liegenden Teil (42) des Lichts ablenkt und so durch die Austrittspupille (7) führt.

Fig. 4

**Beschreibung**

**Technisches Gebiet**

Die vorliegende Erfindung betrifft eine Beleuchtungsvorrichtung mit einer Lichtquelle zur Emission von Licht und einem Reflektor mit einer ellipsoidalen Reflexionsfläche.

**Stand der Technik**

Die Verwendung von ellipsoidalen Reflexionsflächen zur Bündelung des von einer näherungsweise punktförmigen Lichtquelle emittierten Lichts ist bekannt. Wird die Lichtquelle im ersten Brennpunkt der ellipsoidalen Reflexionsfläche angeordnet, wird das Licht mit der Reflexion an letzterer im zweiten Brennpunkt gebündelt. Die beiden Brennpunkte liegen auf einer optischen Achse der ellipsoidalen Reflexionsfläche. Bei den aus dem Stand der Technik bekannten Beleuchtungsvorrichtungen mit einem entsprechenden Reflektor ist dann eine Austrittspupille in der zweiten Brennebene angeordnet. Die Beleuchtungsstärkeverteilung dort ist jedoch in der Regel inhomogen mit einem mittigen Maximum (Spot) und einem deutlichen Abfall zum Rand hin. Zur Homogenisierung wird im Stand der Technik eine Facettierung der ellipsoidalen Reflexionsfläche vorgeschlagen; der Erfinder hat jedoch festgestellt, dass dies zwar die Homogenität verbessern kann, jedoch andererseits zu einer Verringerung der Effizienz führt. Es kann nur noch ein Teil der von der Lichtquelle emittierten Lichts genutzt werden.

Der vorliegenden Erfindung liegt das technische Problem zugrunde, eine besonders vorteilhafte Beleuchtungsvorrichtung anzugeben.

**Darstellung der Erfindung**

Erfindungsgemäß wird dieses Problem gelöst von einer Beleuchtungsvorrichtung mit einer Lichtquelle zur Emission von Licht, einem Reflektor mit einer ellipsoidalen Reflexionsfläche, einer asphärischen Linse und einer Austrittspupille als Ausgang der Beleuchtungsvorrichtung, wobei die Lichtquelle an einem ersten Brennpunkt der ellipsoidalen Reflexionsfläche angeordnet ist und zumindest ein Teil des von der Lichtquelle emittierten Lichts von der ellipsoidalen Reflexionsfläche in Richtung eines zweiten Brennpunkts reflektiert wird, und wobei die Austrittspupille zu dem zweiten Brennpunkt versetzt angeordnet ist, und wobei ferner die asphärische Linse zwischen der ellipsoidalen Reflexionsfläche und der Austrittspupille in einem Strahlengang mit dem reflektierten Licht angeordnet und derart geformt ist, dass

- ein erster Teil des reflektierten Lichts die asphärische Linse mit einem um nicht mehr als 5° verändertem Öffnungswinkel in einem mittleren Bereich passiert und durch die Austrittspupille tritt und zusätzlich
- ein zweiter Teil des reflektierten Lichts die asphärische Linse in einem äußeren Bereich durchsetzt und von der asphärischen Linse abgelenkt und infolgedessen durch die Austrittspupille geführt wird.

Bevorzugte Ausführungsformen ergeben sich aus den abhängigen Ansprüchen und der gesamten vorliegenden Offenbarung. Dabei wird in der Darstellung nicht immer im Einzelnen zwischen Vorrichtungs- und Verwendungsaspekten unterschieden, die Offenbarung ist jedenfalls implizit hinsichtlich sämtlicher Anspruchskategorien zu lesen.

Stellt man sich zur Illustration einen Strahlengang des reflektierten Lichts ohne die asphärische Linse und mit einer Punktquelle im ersten Brennpunkt vor, wird die Austrittspupille derart dimensioniert und in diesem nicht (von einer asphärischen Linse) abgelenkten Strahlengang platziert, dass nur der erste Teil des Lichts hindurchtritt. Der andere, zweite Teil des nicht abgelenkten Lichts würde die Beleuchtungsvorrichtung nicht durch die Austrittspupille verlassen. Der nicht abgelenkte Strahlengang kann dem zweiten Brennpunkt nachgelagert beispielsweise die Form eines geraden Kegels haben, wobei dann nur ein (ebenfalls kegelförmiges) Innenteil mit kleinerem Öffnungswinkel durch die Austrittspupille tritt, der umgebende äußere Teil hingegen nicht.

Die asphärische Linse lässt nun den ersten Teil des Lichts, der ohnehin, also auch ohne die asphärische Linse, durch die Austrittspupille treten würde, auch weiterhin durch die Austrittspupille fallen. Ein Öffnungswinkel des Strahlenbündels mit dem gesamten ersten Teil des Lichts soll sich der asphärischen Linse unmittelbar nachgelagert um nicht mehr als 5°, in dieser Reihenfolge zunehmend bevorzugt nicht mehr als 4°, 3°, 2°, bzw. 1°, ändern, und zwar im Vergleich zu der asphärischen Linse unmittelbar vorgelagert. Besonders bevorzugt durchsetzt der erste Teil die asphärische Linse öffnungswinkeländerungsfrei, also ohne Änderung seines Öffnungswinkels. Diese Angaben sind auch als Definition des "ersten Teils" des reflektierten Lichts zu lesen.

Der erste Teil des Lichts "passiert" die asphärische Linse und muss dabei im Allgemeinen nicht die Linse selbst, also das Linsenmaterial, durchsetzen, sondern kann beispielsweise auch durch ein Loch in der Linse hindurchgehen. Der mittlere Bereich der asphärischen Linse könnte also als Loch in der asphärischen Linse ausgebildet sein, die asphärische Linse also gewissermaßen eine Ringlinse bzw. torusförmig vorgesehen sein. In dem äußeren Bereich durchsetzt das Licht (der zweite Teil) hingegen in jedem Fall die Linse, also das Linsenmaterial.

Den entsprechenden "zweiten Teil" des Lichts, der im Falle des nicht abgelenkten Strahlengangs ohne die asphärische Linse nicht durch die Austrittspupille treten würde, lenkt die asphärische Linse ab und so doch durch die Austrittspupille. Dies erhöht einerseits die Effizienz, macht also mehr des von der Lichtquelle emittierten Lichts nutzbar. Andererseits kann so in der Ebene der Austrittspupille auch eine gleichmäßigere Beleuchtungsstärkeverteilung erreicht werden, etwa gegenüber einem Vergleichsfall mit einer Austrittspupille, durch welche bereits der gesamte nicht abgelenkte Strahlengang fallen würde (die also ohne asphärische Linse und im zweiten Brennpunkt platziert auch von der zweiten Geradenschar durchsetzt wäre).

Der Erfinder hat festgestellt, dass auch eine ideal ellipsoidale Reflexionsfläche die Eigenschaft haben kann, dass beispielsweise leicht versetzt zum ersten Brennpunkt emittiertes Licht von äußeren Reflektorbereichen (größerer Winkel zur optischen Achse des Reflektors) in einer kleinen Umgebung des zweiten Brennpunktes konzentriert wird (*Spot*), während das Licht von inneren Reflektorbereichen (kleinerer Winkel zur optischen Achse) dort weiter verteilt ist. Dies ist jedoch nur ein möglicher Grund für eine gewisse Beleuchtungsstärkeverteilung um den zweiten Brennpunkt, auch eine Abweichung von einer ideal ellipsoidalen Form kann beispielsweise eine Rolle spielen. Indem die Austrittspupille erfindungsgemäß angeordnet und dimensioniert wird, wird der Spot auf die Austrittspupille verteilt, läge jedoch ein Teil (der zweite) des Lichts außerhalb der Austrittspupille.

Die asphärische Linse verringert Verluste durch Aufsammeln des Lichtes, das außerhalb der Austrittspupille liegen würde, und bringt dieses Licht auch bevorzugt in die Randbereiche der Austrittspupille, die vorher dunkler waren.

In bevorzugter Ausgestaltung ist die Austrittspupille so dimensioniert und relativ zu dem Reflektor (und versetzt zum zweiten Brennpunkt) angeordnet, dass von sämtlichen Geraden, welche jeweils die ellipsoidale Reflexionsfläche und den zweiten Brennpunkt durchsetzen, nur eine erste Schar durch die Austrittspupille fällt, eine zweite Schar jedoch außerhalb der Austrittspupille liegt.

Durch die Anordnung der Austrittspupille derart, dass nur die erste, jedoch nicht die zweite Geradenschar die Austrittspupille durchsetzt, wird zunächst nur ein Ausschnitt der Beleuchtungsstärkeverteilung erfasst. Es wird beispielsweise von einer Gauß-förmigen Verteilung nur ein Bereich um deren Maximum (siehe unten im Detail) herausgetrennt, was die Differenz zwischen Maximal- und Minimalwert verringert. Dies allein wäre jedoch hinsichtlich der Effizienz nachteilig, weswegen mit der asphärischen Linse zusätzlich der zweite Teil des Lichts durch die Austrittspupille gelenkt wird.

Der zweite Teil des Lichts kann generell beispielsweise gleichmäßig über die Austrittspupille verteilt werden, was eine durch den ersten Teil vorgegebene Schwankung zwischen Minimum und Maximum unverändert lässt. Andererseits kann der zweite Teil beispielsweise auch vorrangig auf einen Randbereich der Austrittspupille gerichtet werden, was die Schwankung, z. B. das Verhältnis der Beleuchtungsstärken von Zentrum-zu-Außenkante (Mitte zu Rand), weiter reduziert.

Bei der Lichtquelle kann es sich vorzugsweise um eine Gasentladungslampe handeln, besonders bevorzugt ist eine Halogen-Metalldampflampe; dabei ist sowohl ein Gleichstrom- (DC) als auch ein Wechselstrom-Betrieb (AC) möglich. Es kann sich beispielsweise um Kurz- und Mittelbogenentladungslampen von OSRAM handeln, wie zum Beispiel eine HMI-, HTI-, HSR- oder SIRIUS-Entladungslampe. Es kann jedoch auch eine Xenon-Kurzbogenlampe als Lichtquelle vorgesehen sein, etwa des Typs XBO von OSRAM. Andererseits ist auch eine Plasma-Lichtquelle denkbar bzw. könnte die Lichtquelle auch ein Leuchtstoffelement sein, das mit einer bevorzugt beabstandet dazu angeordneten Pumpstrahlungsquelle angeregt wird (*Laser Activated Remote Phospor,* LARP), etwa eine LARP-Kugel. Die Entladungslampen können dabei axial in den ellipsoidalen Reflektor eingebaut werden, so dass der Lichtbogen der Entladungslampe auf der optischen Reflektorachse zu liegen kommt. Alternativ können die oben genannten Entladungslampen, speziell diejenigen mit kurzem Elektrodenabstand, auch quer zur optischen Achse des ellipsoidalen Reflektors eingebaut werden, wobei dann der Lichtbogen quer zur optischen Reflektorachse ausgerichtet ist.

Die am ersten Brennpunkt der ellipsoidalen Reflexionsfläche angeordnete Lichtquelle ist bevorzugt genau in dem ersten Brennpunkt angeordnet (diesen beinhaltet also etwa eine ausgedehnte Lichtquelle). Dies bezieht sich bevorzugt auf den lichtemittiernden Bereich der Lichtquelle, also etwa den Lichtbogen oder Plasmabogen; je nach Betrieb kann dieser beispielsweise ein Maximum (DC) oder auch zwei Maxima haben (AC), wobei sich ein Lichtbogen beispielsweise auch magnetisch verändern, etwa komprimieren lässt (*Magnetic Arc Constriction*). Die Brennpunkte der ellipsoidalen Reflexionsfläche sind die Brennpunkte des der Reflexionsfläche zugrunde liegenden Ellipsoids.

Dieses Ellipsoid ist prolat (gestreckt), die Längsachse des Ellipsoids entspricht der optischen Achse der Reflexionsfläche; die beiden Brennpunkte liegen auf dieser Längsachse/optischen Achse und ergeben sich als Brennpunkt des der ellipsoidalen Reflexionsfläche zugrundeliegenden Ellipsoids. "Ellipsoidale Reflexionsfläche" ist als technischer Begriff zu verstehen, impliziert also nicht zwingend eine ideal ellipsoidale Form, wenngleich eine solche bevorzugt sein kann. Die Reflexionsfläche kann beispielsweise auch facettiert sein, vorzugsweise ist sie glatt. Eine eben beschriebene, ungleichmäßige Beleuchtungsstärkeverteilung kann beispielsweise auch bei einem idealen Ellipsoid durch eine nicht infinitesimal kleine Ausdehnung der Lichtquelle relativ zur Reflexionsfläche bedingt sein, und zwar in Verbindung mit der ellipsoidalen Form (der Reflexionsfläche).

Wie bereits deutlich wurde, repräsentieren die erste und zweite Geradenschar den theoretischen Strahlengang ohne die asphärische Linse und für vom ersten Brennpunkt ausgehendes Licht. Sämtliche der die ellipsoidale Reflexionsfläche und den zweiten Brennpunkt durchsetzenden Geraden können einer der beiden Scharen zugeordnet werden, die beiden Scharen sind disjunkt. Vorzugsweise breitet sich ein Teil des ersten Teils des reflektierten Lichts nun entlang der ersten Geradenschar aus (Anordnung im ersten Brennpunkt) und würde er die Austrittspupille auch ohne die asphärische Linse durchsetzen. Der zweite Teil würde hingegen ohne die asphärische Linse die Beleuchtungsvorrichtung nicht durch die Austrittspupille verlassen. Die Austrittspupille ist versetzt zum zweiten Brennpunkt angeordnet, als nicht im zweiten Brennpunkt.

Der zweite Teil des Lichts muss dabei nicht zwingend das gesamte entlang der zweiten Geradenschar reflektierte Licht umfassen; der zweite Teil kann beispielsweise in dieser Reihenfolge zunehmend bevorzugt mindestens 30 %, 50 %, 70 %, 80 %, 90 % bzw. 95 % des gesamten entlang der zweiten Geradenschar reflektierten Lichts umfassen. Der erste Teil soll beispielsweise in dieser Reihenfolge zunehmend bevorzugt mindestens 70 %, 80 %, 90 % bzw. 95 % des gesamten entlang der ersten Geradenschar reflektierten Lichts umfassen.

Eine bevorzugte Ausführungsform betrifft die Dimensionierung und Anordnung der Austrittspupille relativ zu dem Reflektor, konkret eine bevorzugte Wahl der ersten Geradenschar. Dazu wird die von dem reflektierten Licht auf einer Eintrittsfläche der asphärischen Linse erzeugte Beleuchtungsstärkeverteilung betrachtet (erster und zweiter Teil des Lichts durchsetzen die asphärische Linse). Der Erfinder hat festgestellt, dass diese beispielsweise in grober Näherung Gauß-förmig ist, also jedenfalls mittig ein Maximum hat, von dem weg nach außen die Beleuchtungsstärke abnimmt (beispielsweise von innen nach außen mit zunächst zunehmenden und dann wieder abnehmenden Gradienten).

In der Regel liegt das Maximum der Beleuchtungsstärkeverteilung dort, wo die optische Achse der ellipsoidalen Reflexionsfläche die asphärische Linse durchsetzt. Per definitionem soll nun ein dieses Maximum beinhaltender Mittenbereich der Eintrittsfläche bis zu einem Beleuchtungsstärkewert reichen, der um mindestens 20 %, vorzugsweise mindestens 30 %, besonders mindestens 40 %, und um höchstens 80 %, vorzugsweise höchstens 70 %, besonders bevorzugt höchstens 60 %, kleiner als der Wert des Maximums ist. Der besagte Beleuchtungsstärkewert legt den Rand des Mittenbereichs fest, der sich von dem Maximum bis zu diesem Rand erstreckt (und letzteren beinhaltet). Die erste Geradenschar durchsetzt dann im Gesamten den Mittenbereich und die zweite Geradenschar im Gesamten einen außerhalb davon liegenden Randbereich der Eintrittsfläche.

Soweit im Rahmen dieser Offenbarung auf die "Eintrittsfläche" Bezug genommen wird, meint dies den gesamten, von Licht durchstrahlten Teil einer Einfallsfläche der asphärischen Linse; letztere kann auch größer sein, muss also nicht im Gesamten durchstrahlt werden. Entsprechend ist die "Austrittsfläche" der asphärischen Linse der von Licht durchstrahlte Teil einer Ausfallsfläche der asphärischen Linse.

Bei einer bevorzugten Ausführungsform ist die asphärische Linse derart geformt und angeordnet, dass sie der erste Teil des reflektierten Lichts im Wesentlichen richtungsänderungfrei durchsetzt. Mit der "Richtungsänderung" wird je Lichtstrahl der Winkel zwischen seiner Richtung vor dem Eintritt und seiner Richtung nach dem Austritt betrachtet. "Im Wesentlichen richtungsänderungsfrei" meint dann, dass sämtliche Lichtstrahlen des ersten Teils des reflektierten Lichts um jeweils nicht mehr als 3°, vorzugsweise nicht mehr als 2°, weiter bevorzugt nicht mehr als 1°, abgelenkt werden; besonders bevorzugt ist je Lichtstrahl die Richtung nach der asphärischen Linse dieselbe wie davor, erfolgt also gar keine Richtungsänderung.

In bevorzugter Ausgestaltung durchsetzt der erste Teil des Lichts die asphärische Linse (hat diese also kein Loch, siehe vorne) und hat die asphärische Linse in dem mittleren Bereich eine im Wesentlichen konstante Dicke, vorzugsweise konstante Dicke, wobei die Dicke jeweils in einer zur optischen Achse der asphärischen Linse parallelen Richtung genommen wird (von Eintritts- zu Austrittsfläche). Der "mittlere Bereich" der asphärischen Linse ist insofern der Bereich davon, der im Gesamten von dem ersten Teil des Lichts durchsetzt wird. Soweit auf eine "optische Achse der asphärischen Linse" Bezug genommen wird, ist diese bevorzugt gleich der optischen Achse der ellipsoidalen Reflexionsfläche. In einer Richtung von der ellipsoidalen Reflexionsfläche zur Austrittspupille auf die asphärische Linse blickend kann letztere vorzugsweise zumindest drehsymmetrisch sein (etwa viereckig), besonders bevorzugt ist sie rotationssymmetrisch; die optische Achse der asphärischen Linse ist dann gleich der Achse dieser Dreh- bzw. Rotationssymmetrie.

Im Allgemeinen könnte der mittlere Bereich konstanter Dicke beispielsweise auch mit einer an Eintritts- und Austrittsfläche komplementären Stufigkeit oder Welligkeit geformt sein. Bei einer bevorzugten Ausführungsform ist der mittlere Bereich der asphärischen Linse jedoch als planparallele Platte geformt. Es ist also die Eintrittsfläche in einem Mittenbereich plan und auch die entgegengesetzte Austrittsfläche in einem Mittenbereich plan, wobei die optische Achse der asphärischen Linse jeweils senkrecht auf der planen Fläche steht. Der Mittenbereich von Eintritts- bzw. Austrittsfläche ist jeweils der im Gesamten von dem ersten Teil des reflektierten Lichts durchsetzte Bereich der Eintritts- bzw. Austrittsfläche.

Die Ausgestaltung als planparallele Platte im mittleren Bereich kann etwa auch insoweit vorteilhaft sein, als die asphärische Linse somit in diesem Bereich geometrisch einfach gehalten wird, was die Herstellung vereinfachen kann. Generell kann es sich bei der asphärischen Linse bevorzugt um ein Pressteil handeln, besonders bevorzugt ein Pressteil aus Glas; die Linse wird dann also durch Pressen in eine Form hergestellt. Die asphärische Linse kann auch gehärtet sein, etwa chemisch und/oder thermisch, um die thermische Belastbarkeit zu verbessern. Im Allgemeinen wäre beispielsweise auch eine Linse aus einem Kunststoffmaterial denkbar, etwa ein Spritzgussteil.

Im Allgemeinen könnte die asphärische Linse auch dem zweiten Brennpunkt vorgelagert angeordnet sein (in Bezug auf die Lichtausbreitungsrichtung von der Reflexionsfläche zur Austrittspupille). Der mittlere Bereich der asphärischen Linse ist dann beispielsweise als planparallele Platte geformt, und ein äußerer Bereich davon könnte als Zerstreuungslinse den Öffnungswinkel des zweiten Teils des reflektierten Lichts dem zweiten Brennpunkt vorgelagert aufweiten, sodass der Öffnungswinkel dem zweiten Brennpunkt nachgelagert entsprechend verringert wäre.

In bevorzugter Ausgestaltung ist die asphärische Linse jedoch zwischen dem zweiten Brennpunkt und der Austrittspupille angeordnet und ist die asphärische Linse in dem äußeren Bereich als Sammellinse geformt, wird also der Öffnungswinkel des zweiten Teils des reflektierten Lichts von der asphärischen Linse verringert, beispielsweise um mindestens 10°, 15° bzw. 20° (in der Reihenfolge der Nennung zunehmend bevorzugt); mögliche Obergrenzen können beispielsweise bei höchstens 60° bzw. 40° liegen. Soweit der Öffnungswinkel in unterschiedlichen Richtungen senkrecht zur optischen Achse der asphärischen Linse unterschiedlich groß sein sollte, wird generell im Rahmen dieser Offenbarung ein über einen Umlauf um die optische Achse gebildeter Mittelwert betrachtet.

Die Platzierung der asphärischen Linse dem zweiten Brennpunkt nachgelagert kann etwa insoweit vorteilhaft sein, als sie so weiter zu der Lichtquelle beabstandet und damit im Betrieb zumindest etwas weniger einer thermischen Beanspruchung ausgesetzt ist, was etwa einer temperaturschwankungsbedingten (Ein-/Ausschalten) Dejustage der asphärischen Linse aufgrund unterschiedlicher thermischer Ausdehnungskoeffizienten vorbeugen helfen kann. Zudem kann der größere Abstand auch das Anordnen eines Filters dazwischen ermöglichen. Andererseits ist die asphärische Linse so eben auch näher an der Austrittspupille angeordnet, kann sie diese also gewissermaßen zum Inneren der Beleuchtungsvorrichtung abdecken und so auch eine Splitterschutzfunktion übernehmen, also etwa im Falle des Berstens der Lichtquelle einem Austritt von Splittern vorbeugen. Vorzugsweise ist die asphärische Linse zu der Austrittspupille und/oder zu dem zweiten Brennpunkt um jeweils mindestens 1/10 des Abstands zwischen Austrittspupille und zweitem Brennpunkt beabstandet. Der Abstand wird jeweils auf der optischen Achse der asphärischen Linse bis zur Eintrittsfläche (für den Abstand zum zweiten Brennpunkt) bzw. bis zur Austrittsfläche (für den Abstand zur Austrittspupille) genommen.

Die Austrittspupille wird beispielsweise von einer Aperturblende oder einem Einsatz für eine optische Maske (*Graphical Optical Blackout,* GOBO) bzw. der optischen Maske selbst definiert und auch als Gate bezeichnet. Der Abstand bis zu der Austrittspupille wird dann bis zu jener zur optischen Achse der asphärischen Linse senkrechten Ebene genommen, in welcher (bezogen auf die Lichtausbreitung) erstmals der durch die Austrittpupille vorgegebene Durchmesser wirksam ist. Dort wird auch der Durchmesser der Austrittspupille ermittelt.

Die asphärische Linse ist in dem äußeren Bereich bevorzugt als Sammellinse geformt, sie kann dabei in dem äußeren Bereich also im Allgemeinen auch plankonvex oder konkav-konvex sein, vorzugsweise ist sie jedoch bikonvex.

In bevorzugter Ausgestaltung ist die Eintrittsfläche der asphärischen Linse in einem Randbereich konvex. Der "Randbereich" der Eintrittsfläche ist der im Gesamten, von dem gesamten zweiten Teil des reflektierten Lichts durchsetzte Bereich davon; ebenso ist der Randbereich der Austrittsfläche der im Gesamten von dem gesamten zweiten Teil des reflektierten Lichts durchsetzte Bereich der Austrittsfläche.

In bevorzugter Ausgestaltung ist die Austrittsfläche in dem Randbereich konvex. Besonders bevorzugt ist die asphärische Linse sowohl im Eintrittsflächen-Randbereich als auch im Austrittsflächen-Randbereich jeweils konvex gekrümmt (ist sie also eben insoweit bikonvex).

Bei einer bevorzugten Ausführungsform ist die asphärische Linse näher an der Austrittspupille als am zweiten Brennpunkt angeordnet. Es wird auf die vorstehenden Angaben zur Abstandsmessung verwiesen, verglichen wird also der Abstand zwischen zweitem Brennpunkt und Eintrittsfläche der asphärischen Linse mit jenem zwischen Austrittsfläche der asphärischen Linse und Austrittspupille.

Die Austrittspupille hat einen Austrittspupillen-Durchmesser, wobei "Durchmesser" sich im Rahmen dieser Offenbarung generell auf den Mittelwert aus kleinster und größter Erstreckung bezieht und im bevorzugten Fall einer Kreisform gleich dem Kreisdurchmesser ist. Der im Gesamten vom gesamten zweiten Teil des reflektierten Lichts durchsetzte Randbereich der Eintrittsfläche hat einen Innen- und einen Außendurchmesser, welche Durchmesser an einer senkrechten Projektion des Eintrittsflächen-Randbereichs in eine zur optischen Achse der asphärischen Linse senkrechte Ebene ermittelt werden. Bei einer bevorzugten Ausführungsform ist der Außendurchmesser des Eintrittsflächen-Randbereichs größer als der Austrittspupillen-Durchmesser, beispielsweise um in dieser Reihenfolge zunehmend mindestens bevorzugt 5 %, 10 % bzw. 15 %; mögliche Obergrenzen können beispielsweise bei höchstens 50 %, 40 % bzw. 30 % liegen.

In bevorzugter Ausgestaltung ist die asphärische Linse derart vorgesehen, dass der im Gesamten vom gesamten ersten Teil des reflektierten Lichts durchsetzte Mittenbereich der Eintrittsfläche eine gewisse Mindestgröße relativ zur Austrittspupille hat. Der Außendurchmesser des Mittenbereichs, der ebenfalls an einer senkrechten Projektion des Mittenbereichs in eine zur optischen Achse der asphärischen Linse senkrechte Ebene ermittelt wird, soll in dieser Reihenfolge zunehmend bevorzugt mindestens 2/3, 5/6 bzw. 9/10 des Austrittspupillen-Durchmessers ausmachen, weiter bevorzugt zumindest gleich dem Austrittspupillen-Durchmesser sein, besonders bevorzugt größer sein als dieser.

Bei einer bevorzugten Ausführungsform ist zusätzlich zu dem Reflektor mit der ellipsoidalen Reflexionsfläche ein weiterer Reflektor mit einer sphärischen Reflexionsfläche vorgesehen. Dieser ist derart angeordnet, dass die Lichtquelle an, vorzugsweise in einem Mittelpunkt der zugrunde liegenden Kugel angeordnet ist und ein Teil des von der Lichtquelle emittierten Lichts reflexionsfrei, also ohne vorherige Reflexion an der ellipsoidalen Reflexionsfläche, auf die sphärische Reflexionsfläche fällt. Vorzugsweise fallen Kugelmittelpunkt und erster Brennpunkt zusammen.

In idealisierter Betrachtung (Punktquelle im Mittelpunkt) reflektiert die sphärische Reflexionsfläche das Licht genau zum Mittelpunkt zurück, in realiter kann es einen gewissen Versatz geben. Wenngleich das an der sphärischen Reflexionsfläche zurückreflektierte Licht anteilig an Bestandteilen der Lichtquelle absorbiert werden kann, gelangt dennoch ein gewisser Teil zur ellipsoidalen Reflexionsfläche, um von dieser in Richtung des zweiten Brennpunkts reflektiert zu werden. So lässt sich die Effizienz erhöhen.

Die vorstehend beschriebene Anordnung der asphärischen Linse zwischen dem zweiten Brennpunkt und der Austrittspupille kann in diesem Zusammenhang besondere Vorteile bieten, weil so hinreichend Raum zum Anordnen des weiteren Reflektors zur Verfügung steht. Der weitere Reflektor wird zwischen der ellipsoidalen Reflexionsfläche und der asphärischen Linse angeordnet (bezogen auf die Lichtausbreitungsrichtung von ersterer zu der Austrittspupille), wofür deren Platzierung dem zweiten Brennpunkt nachgelagert gut Platz schafft.

In bevorzugter Ausgestaltung ist die sphärische Reflexionsfläche um die optische Achse der ellipsoidalen Reflexionsfläche vollständig umlaufend vorgesehen, ist sie jedoch in einem von der optischen Achse durchsetzten Bereich unterbrochen. Eine senkrechte Projektion der sphärischen Reflexionsfläche in eine zur optischen Achse der ellipsoidalen Reflexionsfläche senkrechte Ebene ergibt beispielsweise eine Kreisringform. Durch den Unterbrechungsbereich tritt das an der ellipsoidalen Reflexionsfläche reflektierte Licht, letzteres gelangt also durch den Unterbrechungsbereich zur asphärischen Linse.

Bei der der ellipsoidalen Reflexionsfläche zugrunde liegenden Ellipse kann die numerische Exzentrizität (Verhältnis des Abstands der Brennpunkte vom Mittelpunkt zu großer Halbachse) vorzugsweise nicht größer als 0,9, weiter bevorzugt nicht größer als 0,85, besonders bevorzugt nicht größer als 0,8 sein.

Die Erfindung betrifft auch einen Scheinwerfer mit einer vorliegend beschriebenen Beleuchtungsvorrichtung, insbesondere einen Bühnenscheinwerfer.

Ferner betrifft die Erfindung auch die Verwendung einer vorliegend beschriebenen Beleuchtungsvorrichtung oder eines entsprechenden Scheinwerfers zur Beleuchtung, insbesondere zur Bühnenbeleuchtung.

## Kurze Beschreibung der Zeichnungen

Im Folgenden wird die Erfindung anhand eines Ausführungsbeispiels näher erläutert, wobei die einzelnen Merkmale im Rahmen der unabhängigen Ansprüche auch in anderer Kombination erfindungswesentlich sein können und in dieser Form offenbart sein sollen; weiterhin wird nicht im Einzelnen zwischen den verschiedenen Anspruchskategorien unterschieden.

Im Einzelnen zeigt:

Fig. 1    eine erfindungsgemäße Beleuchtungsvorrichtung in einem schematischen Schnitt mit einem den ersten Teil des reflektierten Lichts illustrierenden Strahlengang;

Fig. 2    den Beleuchtungsstärkeverlauf in einer den zweiten Brennpunkt der ellipsoidalen Reflexionsfläche beinhaltenden Ebene für die Beleuchtungsvorrichtung gemäß Fig. 1;

Fig. 3    die Beleuchtungsvorrichtung gemäß Fig. 1 mit einem den zweiten Teil des reflektierten Lichts illustrierenden Strahlengang;

Fig. 4    eine Prinzipskizze zur Illustration des Effekts der asphärischen Linse;

Fig. 5    den Beleuchtungsstärkeverlauf in der Austrittspupille der Beleuchtungsvorrichtung gemäß den Fig. 1 und 3.

Fig. 6    eine Tabelle mit den Parametern der in den Fig. 1 und 3 gezeigten asphärischen Linse.

## Bevorzugte Ausführung der Erfindung

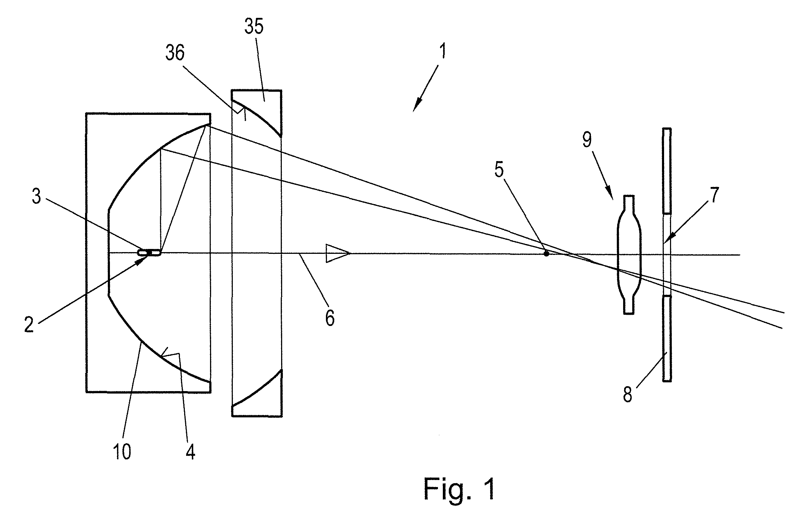

Fig. 1 zeigt eine erfindungsgemäße Beleuchtungsvorrichtung 1 in einem Schnitt. Eine hier vereinfacht als Punktquelle dargestellte Lichtquelle 2, nämlich eine Halogen-Metalldampflampe, ist in einem ersten Brennpunkt 3 eines Reflektors 10 mit einer ellipsoidalen, also als Rotationsellipsoid ausgeführten, Reflexionsfläche 4 angeordnet. Von der Lichtquelle 2 emittiertes Licht fällt jedenfalls zum Teil direkt, also ohne vorherige Reflexion, auf die ellipsoidale Reflexionsfläche 4 und wird von dort in Richtung eines zweiten Brennpunkts 5 reflektiert.

Der erste 3 und der zweite Brennpunkt 5 liegen auf einer optischen Achse 6 der ellipsoidalen Reflexionsfläche. Letztere ist um diese optische Achse 6 rotationssymmetrisch. Die Lichtquelle 2, vorliegend der Lichtbogen einer HTI 1200 W von OSRAM, hat eine Längenausdehnung von rund 5 mm parallel zur optischen Achse 6 der ellipsoidalen Reflexionsfläche 4, die Emission erfolgt also nicht perfekt punktförmig. Infolgedessen schneiden sich auch nicht sämtliche Lichtstrahlen im zweiten Brennpunkt 5. Ein versetzt zum ersten Brennpunkt 3 emittiertes Strahlenbündel ist schematisch und insoweit etwas vereinfacht dargestellt.

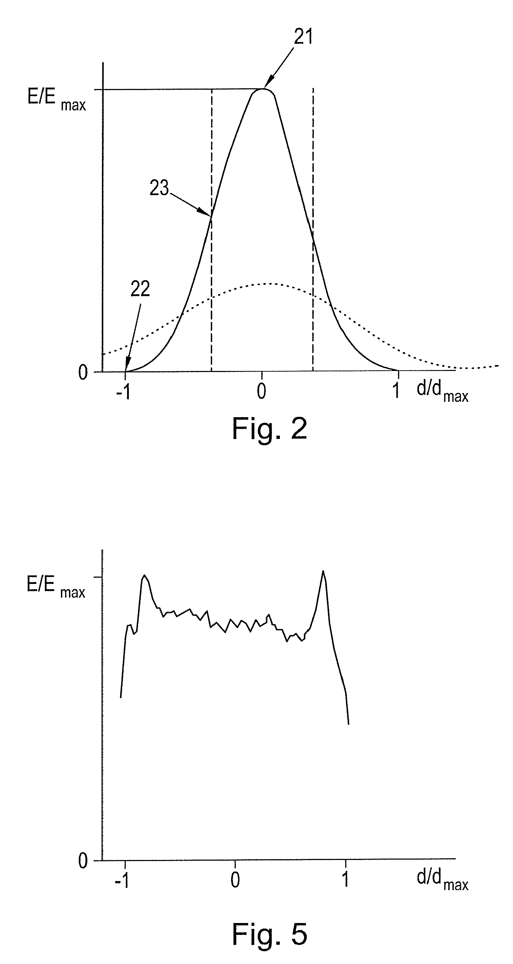

Fig. 2 illustriert den Beleuchtungsstärkeverlauf in einer den zweiten Brennpunkt 5 beinhaltenden, zur optischen Achse 6 der ellipsoidalen Reflexionsfläche 4 senkrechten Ebene. Dabei ist die Beleuchtungsstärke entlang einer in dieser Ebene liegenden Geraden durch den zweiten Brennpunkt (der bei d=0 liegt) in einem Diagramm aufgetragen.

Es ergibt sich eine Kurve, die näherungsweise als Gauß-förmig beschrieben werden kann. Von einem mittigen Maximum 21 fällt die Beleuchtungsstärke (vorliegend auf den Maximalwert normiert) nach außen hin ab. Die Differenz zwischen einem randseitigen Minimum 22 und dem Maximum 21 ist recht groß, das Rand/Mitte-Verhältnis, welches ein Maß für die Homogenität der Ausleuchtung ist, ist entsprechend klein.

Um die Homogenität zu verbessern, kann, wie in Fig. 2 durch die strichlierten Linien angedeutet, zum Beispiel nur ein Ausschnitt der Beleuchtung zugeführt werden, können also die kleinen Werte der Verteilung abgetrennt werden. Dies verringert die Differenz zwischen dem Maximum 21 und einem neuen randseitigen Minimum 23, verschlechtert allerdings die Effizienz. Die kleinen Beleuchtungsstärkewerte blieben ungenutzt. Die punktierte Linie illustriert zum Vergleich einen facettierten Reflektor; die Homogenität ist damit verbessert, allerdings die Effizienz verschlechtert.

Bei der erfindungsgemäßen Beleuchtungsvorrichtung 1 wird deshalb zwar durch eine entsprechende Positionierung der Austrittspupille 7 (vgl. Fig. 1) relativ zur ellipsoidalen Reflexionsfläche 4 zunächst, um im Bild von Fig. 2 zu bleiben, nur ein mittiger Teil der Verteilung ausgeschnitten. Die Austrittspupille 7 ist also derart platziert, dass im Falle einer theoretisch allein aus Lichtquelle 2, ellipsoidaler Reflexionsfläche 4 und Austrittspupille 7 bestehender Beleuchtungsvorrichtung 1 nur ein erster Teil des an der Reflexionsfläche 4 reflektierten Lichts durch die Austrittspupille 7 treten würde, ein zweiter Teil jedoch außerhalb davon läge, also auf eine Aperturblende 8 fallen würde.

Die erfindungsgemäße Beleuchtungsvorrichtung 1 weist jedoch zusätzlich eine asphärische Linse 9 auf, welche nun einerseits den ersten Teil des Lichts richtungsänderungsfrei zur Austrittspupille 7 hin passieren lässt, den zweiten (eigentlich außerhalb der Austrittspupille 7 liegenden) Teil jedoch ablenkt, und zwar durch die Austrittspupille 7 hindurch. Dazu ist die asphärische Linse 9 in einem mittleren, vom ersten Teil des reflektierten Lichts durchsetzten Bereich als planparallele Platte geformt; ein äußerer, vom zweiten Teil des reflektierten Lichts durchsetzter Bereich der asphärischen Linse 9 ist hingegen als Sammellinse geformt, um den zweiten Teil des reflektierten Lichts in die Austrittspupille 7 hinein zu bündeln.

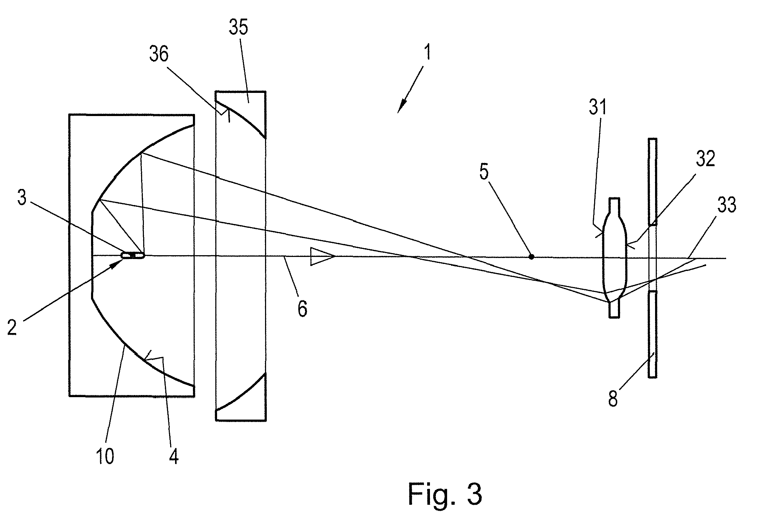

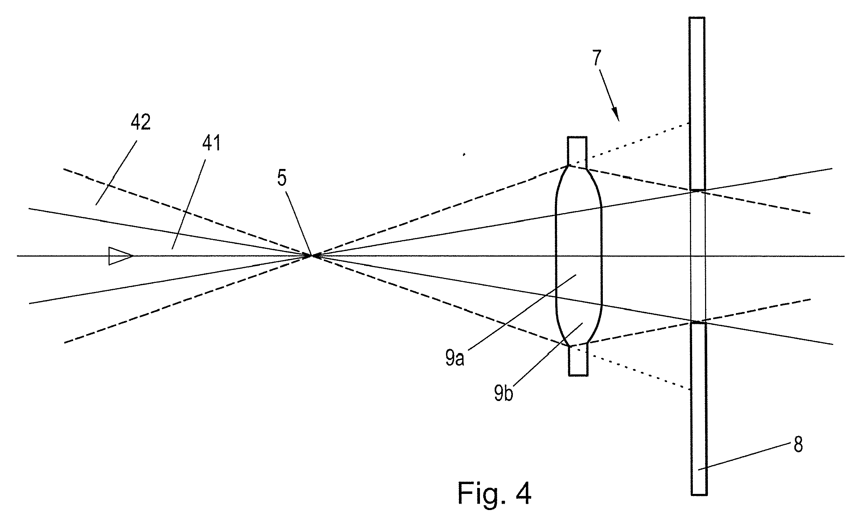

Fig. 3 zeigt denselben Aufbau wie Fig. 1, allerdings mit einem anderen (ebenfalls versetzt zum ersten Brennpunkt 3 emittiertes) Strahlenbündel, welches nämlich den zweiten Teil des reflektierten Lichts illustriert, der also ohne die asphärische Linse 9 außerhalb der Austrittspupille 7 läge. Die in ihrem äußeren Bereich als Sammellinse geformte asphärische Linse 9 bündelt den zweiten Teil des Lichts jedoch, sodass dieser durch die Austrittspupille fällt (siehe auch die Prinzipskizze gemäß Fig. 4). Eine Eintrittsfläche 31 der asphärischen Linse 9 ist in einem von dem zweiten Teil des Lichts durchsetzten Randbereich konvex und die entgegengesetzte Austrittsfläche 32 ist in einem von dem zweiten Teil des reflektierten Lichts durchsetzten Randbereich ebenfalls konvex.

In den Fig. 1 und 3 ist ferner ein weiterer Reflektor 35 mit einer sphärischen Reflexionsfläche 36 zu erkennen. Der Mittelpunkt der der sphärischen Reflexionsfläche 36 zugrunde liegenden Kugel fällt mit der Lichtquelle 2 und dem ersten Brennpunkt 3 zusammen. Von der Lichtquelle 2 nach vorne, also in den Figuren nach schräg rechts oben und unten abgegebenes Licht wird an der sphärischen Reflexionsfläche 36 zurückreflektiert, durchsetzt die Lichtquelle 2 und fällt dann auf die ellipsoidale Reflexionsfläche 4. Der weitere Reflektor 35 erhöht die Effizienz, wobei die Anordnung der asphärischen Linse 9 zwischen zweitem Brennpunkt 5 und Austrittspupille 7 vorteilhafterweise genügend Raum für die Anordnung des weiteren Reflektors 35 bietet.

Fig. 4 illustriert das ungehinderte Passieren des ersten und die Bündelung des zweiten Teils mit der asphärischen Linse nochmals mit einer schematischen Prinzipskizze. Der erste Teil 41 des von der ellipsoidalen Reflexionsfläche 4 (in Fig. 4 der Übersichtlichkeit halber nicht gezeigt) reflektierten Lichts passt ohnehin durch die Austrittspupille 7 und wird deshalb von dem mittleren Bereich 9a der asphärischen Linse 9 nicht winkelverkippt (keine Richtungsänderung), der mittlere Bereich 9a ist als planparallele Platte geformt. Der zweite Teil 42 des an der ellipsoidalen Reflexionsfläche 4 reflektierten Lichts läge jedoch außerhalb der Austrittspupille 7, was vorliegend mit dem punktiert eingezeichneten Strahlengang illustriert wird. Die in dem äußeren Bereich 9b als Sammellinse geformte asphärische Linse bricht diesen zweiten Teil 42 jedoch in die Austrittspupille 7 hinein. Der zweite Teil 42 des reflektierten Lichts wird also gebündelt und so gemeinsam mit dem ersten Teil 41 des reflektierten Lichts durch die Austrittspupille 7 geführt.

Vorliegend ist die asphärische Linse 9 dem zweiten Brennpunkt 5 nachgelagert angeordnet. Zumindest im Prinzip wäre es alternativ auch denkbar, dem zweiten Brennpunkt 5 vorgelagert eine asphärische Linse vorzusehen, welche in dem vom ersten Teil 41 des reflektierten Lichts durchsetzten mittleren Bereich ebenfalls als planparallele Platte geformt ist, in dem äußeren, vom zweiten Teil 42 durchsetzten Bereich jedoch als Zerstreuungslinse. Der Öffnungswinkel des zweiten Teils 42 des reflektierten Lichts würde dem zweiten Brennpunkt 5 vorgelagert vergrößert und dementsprechend diesem nachgelagert verkleinert, sodass der zweite Teil 42 des Lichts wiederum in die Austrittspupille 7 hinein gebrochen, also durch diese geführt wäre.

Fig. 5 zeigt für die Beleuchtungsvorrichtung 1 gemäß den Fig. 1 und 3 den Beleuchtungsstärkeverlauf in der Ebene der Austrittspupille, und zwar entlang einer Geraden genommen, welche durch einen Schnittpunkt zwischen dieser Ebene und einer optischen Achse 33 der asphärischen Linse 9 (vgl. Fig. 3 zur Illustration) verläuft. Die entlang dieser Geraden genommene Beleuchtungsstärke ist wiederum in einem Diagramm aufgetragen, und es zeigt sich ein gleichmäßiger Verlauf. Das Rand/Mitte-Verhältnis liegt näherungsweise bei 1. Die Homogenität ist sogar besser als in einem Vergleichsfall, in dem allein der erste Teil 41 des reflektierten Licht genutzt wird; zudem ist die Effizienz gegenüber diesem Vergleichsfall erhöht, weil eben der zweite Teil 42 des reflektierten Lichts zusätzlich genutzt wird.

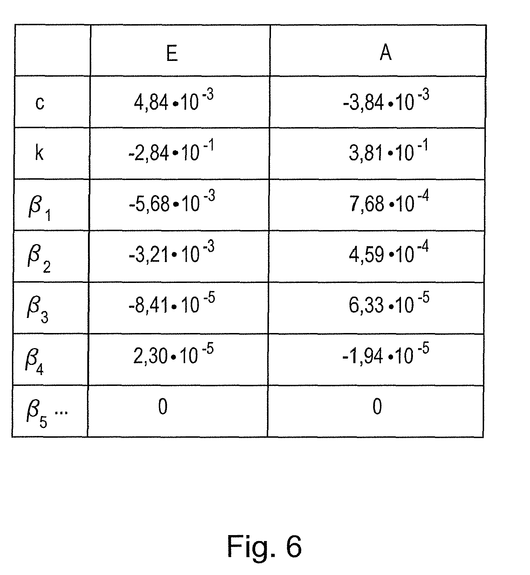

Fig. 6 zeigt in tabellarischer Form die Werte der in den Fig. 1 und 3 gezeigten asphärischen Linse. Die Parameter beziehen sich auf die Asphärengleichung

$$z = \frac{cr^2}{1 + \sqrt{1 - (1+k)c^2 r^2}} + \beta_1 r^1 + \beta_2 r^2 + \beta_3 r^3 + \beta_4 r^4 + \beta_5 r^5 + \cdots \quad (\text{Glg. 1})$$

Dabei gibt r den Abstand senkrecht zur optischen Achse nach außen an (Einfallshöhe), z die Pfeilhöhe (Rotationsfläche der asphärischen Linse), ist k die konische Konstante und c die Scheitelkrümmung. Die Einheit von c und $\beta_2$ ist jeweils 1/mm, jene von $\beta_3$ 1/mm$^2$ und die von $\beta_4$1/mm$^3$; die Koeffizienten ab $\beta_5$ sind gleich Null.

**Patentansprüche**

1. Beleuchtungsvorrichtung (1) mit
   einer Lichtquelle (2) zur Emission von Licht,
   einem Reflektor (10) mit einer ellipsoidalen Reflexionsfläche (4),
   einer asphärischen Linse (9) und
   einer Austrittspupille (7) als Ausgang der Beleuchtungsvorrichtung (1),
   wobei die Lichtquelle (2) an einem ersten Brennpunkt (3) der ellipsoidalen Reflexionsfläche (4) angeordnet ist und zumindest ein Teil des von der Lichtquelle (2) emittierten Lichts von der ellipsoidalen Reflexionsfläche (4) in Richtung eines zweiten Brennpunkts (6) reflektiert wird,
   und wobei die Austrittspupille (7) zu dem zweiten Brennpunkt (6) versetzt angeordnet ist,
   und wobei ferner die asphärische Linse (9) zwischen der ellipsoidalen Reflexionsfläche (4) und der Austrittspupille (7) in einem Strahlengang mit dem reflektierten Licht angeordnet und derart geformt ist, dass

   - ein erster Teil (41) des reflektierten Lichts die asphärische Linse (9) mit einem um nicht mehr als 5° veränderten Öffnungswinkel in einem mittleren Bereich (9a) passiert und durch die Austrittspupille (7) tritt und zusätzlich
   - ein zweiter Teil (42) des reflektierten Lichts die asphärische Linse (9) in einem äußeren Bereich (9b) durchsetzt und von der asphärischen Linse (9) abgelenkt und infolgedessen durch die Austrittspupille (7) geführt wird.

2. Beleuchtungsvorrichtung (1) nach Anspruch 1, bei welcher die Austrittspupille so dimensioniert und relativ zu dem Reflektor (10) angeordnet ist, dass von sämtlichen Geraden, welche jeweils die ellipsoidale Reflexionsfläche (4) und den zweiten Brennpunkt (6) durchsetzen, nur eine erste Schar durch die Austrittspupille fällt, eine zweite Schar jedoch außerhalb der Austrittspupille liegt.

3. Beleuchtungsvorrichtung (1) nach Anspruch 2, bei welcher das reflektierte Licht auf einer Eintrittsfläche (31) der asphärischen Linse einen Beleuchtungsstärkeverlauf mit einem Maximum in einem Mittenbereich erzeugt, der sich über die Eintrittsfläche (31) bis zu einem Beleuchtungsstärkewert erstreckt, der um mindestens 20 % und höchstens 80 % kleiner als der Wert des Maximums ist, wobei die erste Geradenschar den Mittenbereich durchsetzt und die zweite Geradenschar einen außerhalb des Mittenbereichs liegenden Randbereich der Eintrittsfläche (31) durchsetzt.

4. Beleuchtungsvorrichtung (1) nach einem der vorstehenden Ansprüche, bei welcher die asphärische Linse (9) derart geformt und angeordnet ist, dass der erste Teil (41) des reflektierten Lichts die asphärische Linse (9) im Wesentlichen richtungsänderungsfrei durchsetzt.

5. Beleuchtungsvorrichtung (1) nach einem der vorstehenden Ansprüche, bei welcher der erste Teil (41) des reflektierten Lichts die asphärische Linse (9) durchsetzt und die asphärische Linse (9) in dem mittleren Bereich (9a) eine im Wesentlichen konstante Dicke hat.

6. Beleuchtungsvorrichtung (1) nach den Ansprüchen 4 und 5, bei welcher die asphärische Linse (9) in dem mittleren Bereich (9a) als planparallele Platte geformt ist.

7. Beleuchtungsvorrichtung (1) nach einem der vorstehenden Ansprüche, bei welcher die asphärische Linse (9) zwischen dem zweiten Brennpunkt (6) und der Austrittspupille (7) angeordnet ist und in dem äußeren Bereich (9b) als Sammellinse geformt ist.

8. Beleuchtungsvorrichtung (1) nach Anspruch 7, bei welcher eine Eintrittsfläche (31) der asphärischen Linse (9) in einem Randbereich, welchen der zweite Teil des Lichts durchsetzt, konvex ist und/oder eine Austrittsfläche (32) der asphärischen Linse (9) in einem Randbereich, welchen der zweite Teil (42) des Lichts durchsetzt, konvex ist.

9. Beleuchtungsvorrichtung (1) nach Anspruch 7 oder 8, bei welcher die asphärische Linse (9) näher an der Austrittspupille (7) als an dem zweiten Brennpunkt (6) angeordnet ist.

10. Beleuchtungsvorrichtung (1) nach einem der vorstehenden Ansprüche, bei welcher die Austrittspupille (7) einen Austrittspupillen-Durchmesser hat und ein Randbereich einer Eintrittsfläche (31) der asphärischen Linse (9), welchen der zweite Teil (42) des Lichts durchsetzt, einen senkrecht zu einer optischen Achse (33) der asphärischen Linse (9) genommenen Außendurchmesser hat, welcher größer als der Austrittspupillen-Durchmesser ist.

11. Beleuchtungsvorrichtung (1) nach Anspruch 10, bei welcher ein Mittenbereich einer Eintrittsfläche (31) der asphärischen Linse (9), welchen der erste Teil des Lichts durchsetzt, einen senkrecht zu der optischen Achse (33) der asphärischen Linse (9) genommenen Außendurchmesser hat, welcher mindestens 2/3 des Austrittspupillen-Durchmessers ausmacht.

12. Beleuchtungsvorrichtung (1) nach einem der vorstehenden Ansprüche mit einem weiteren Reflektor (35), welcher eine sphärische Reflexionsfläche (36) aufweist, wobei die Lichtquelle (2) an einem Mittelpunkt der zugrundeliegenden Kugel angeordnet ist und ein Teil des von der Lichtquelle (2) emittierten Lichts reflexionsfrei auf die sphärische Reflexionsfläche (36) fällt und davon zurück in Richtung der Lichtquelle (2) reflektiert wird, diese passiert und auf die ellipsoidale Reflexionsfläche (4) fällt.

13. Beleuchtungsvorrichtung (1) nach Anspruch 12, bei welcher die sphärische Reflexionsfläche (36) bezogen auf eine optische Achse der ellipsoidalen Reflexionsfläche (4) vollständig umlaufend vorgesehen ist, jedoch in einem von der optischen Achse durchsetzten Bereich unterbrochen ist, durch welchen das an der ellipsoidalen Reflexionsfläche (4) reflektierte Licht passiert.

14. Scheinwerfer mit einer Beleuchtungsvorrichtung (1) nach einem der vorstehenden Ansprüche.

15. Verwendung einer Beleuchtungsvorrichtung (1) nach einem der vorstehenden Ansprüche oder eines Scheinwerfers nach Anspruch 14 zur Beleuchtung, insbesondere zur Bühnenbeleuchtung.

Fig. 1

Fig. 2

Fig. 5

Fig. 3

Fig. 4

|  | E | A |
|---|---|---|
| c | $4{,}84 \cdot 10^{-3}$ | $-3{,}84 \cdot 10^{-3}$ |
| k | $-2{,}84 \cdot 10^{-1}$ | $3{,}81 \cdot 10^{-1}$ |
| $\beta_1$ | $-5{,}68 \cdot 10^{-3}$ | $7{,}68 \cdot 10^{-4}$ |
| $\beta_2$ | $-3{,}21 \cdot 10^{-3}$ | $4{,}59 \cdot 10^{-4}$ |
| $\beta_3$ | $-8{,}41 \cdot 10^{-5}$ | $6{,}33 \cdot 10^{-5}$ |
| $\beta_4$ | $2{,}30 \cdot 10^{-5}$ | $-1{,}94 \cdot 10^{-5}$ |
| $\beta_5 \, \cdots$ | 0 | 0 |

Fig. 6

Europäisches
Patentamt

European
Patent Office

Office européen
des brevets

**EUROPÄISCHER RECHERCHENBERICHT**

Nummer der Anmeldung

EP 15 20 1889

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 10 2005 044237 A1 (SCHOTT AG [DE]) 22. März 2007 (2007-03-22) * Absatz [0052] - Absatz [0085] * * Abbildungen 1,3,8,11 * ----- | 1-4,7-15 | INV. F21V5/04 F21V7/08 G03B21/20 F21V11/10 G02B19/00 |
| X | EP 0 395 156 A1 (KONINKL PHILIPS ELECTRONICS NV [NL]) 31. Oktober 1990 (1990-10-31) * Abbildung 23 * ----- | 1-5,7-15 | |
| X | US 6 231 193 B1 (SUGAWARA SABURO [JP]) 15. Mai 2001 (2001-05-15) * Spalte 6, Zeile 15 - Spalte 16, Zeile 47 * * Abbildungen 1-3 * ----- | 1-5, 10-15 | |
| X | GB 934 650 A (ZEISS IKON AG) 21. August 1963 (1963-08-21) * Seite 2, Zeile 1 - Seite 3, Zeile 95 * * Abbildung 1 * ----- | 1,12,13 | |
| X | US 2002/048172 A1 (WADA MITSUHIRO [JP] ET AL) 25. April 2002 (2002-04-25) * Absatz [0078] - Absatz [0193] * * Abbildungen 3-6 * ----- | 1-15 | RECHERCHIERTE SACHGEBIETE (IPC) F21V F21W G03B G02B |
| A | DE 693 19 078 T2 (CANON KK [JP]) 10. Dezember 1998 (1998-12-10) * Seite 5, Zeile 20 - Seite 10, Zeile 15 * * Abbildung 4 * ----- | 1 | |

Der vorliegende Recherchenbericht wurde für alle Patentansprüche erstellt

| Recherchenort | Abschlußdatum der Recherche | Prüfer |
|---|---|---|
| Den Haag | 18. März 2016 | Blokland, Russell |

EPO FORM 1503 03.82 (P04C03)

**ANHANG ZUM EUROPÄISCHEN RECHERCHENBERICHT**
**ÜBER DIE EUROPÄISCHE PATENTANMELDUNG NR.**

EP 15 20 1889

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

18-03-2016

| Im Recherchenbericht angeführtes Patentdokument | Datum der Veröffentlichung | Mitglied(er) der Patentfamilie | Datum der Veröffentlichung |
|---|---|---|---|
| DE 102005044237 A1 | 22-03-2007 | KEINE | |
| EP 0395156 A1 | 31-10-1990 | CN 1048106 A | 26-12-1990 |
| | | EP 0395156 A1 | 31-10-1990 |
| | | JP 3377095 B2 | 17-02-2003 |
| | | JP H03111806 A | 13-05-1991 |
| | | NL 8901077 A | 16-11-1990 |
| | | US 5098184 A | 24-03-1992 |
| US 6231193 B1 | 15-05-2001 | EP 0864897 A2 | 16-09-1998 |
| | | US 6231193 B1 | 15-05-2001 |
| GB 934650 A | 21-08-1963 | KEINE | |
| US 2002048172 A1 | 25-04-2002 | CN 1229180 A | 22-09-1999 |
| | | US 2002048172 A1 | 25-04-2002 |
| DE 69319078 T2 | 10-12-1998 | DE 69319078 D1 | 16-07-1998 |
| | | DE 69319078 T2 | 10-12-1998 |
| | | EP 0603583 A1 | 29-06-1994 |
| | | JP H06160766 A | 07-06-1994 |
| | | US 5438379 A | 01-08-1995 |

EPO FORM P0461

Für nähere Einzelheiten zu diesem Anhang : siehe Amtsblatt des Europäischen Patentamts, Nr.12/82